# EUROPÄISCHE PATENTANMELDUNG

(11) **EP 0 982 092 A2**
(43) Veröffentlichungstag der Anmeldung: **01.03.2000**
(21) Anmeldenummer: 99113745.6
(22) Anmeldetag: 14.07.1999
(51) Int. Cl.: B23D 59/00, B23Q 11/00

(54) **Staubschutzvorhang für Sägemaschinen insbesonderer Plattenaufteilsägen**

(30) Priorität: 27.08.1998 DE 19838925
(71) Anmelder: HOLZMA-MASCHINENBAU GmbH, 75365 Calw (DE)
(72) Erfinder: Jenkner, Erwin, 71083 Oberjesingen (DE); Kempf, Martin, 72202 Nagold (DE)
(74) Vertreter: Steimle, Josef, Dipl.-Ing.

(57) **Zusammenfassung**

Die Erfindung betrifft einen Staubschutzvorhang (32 bzw. 34) für Sägemaschinen, insbesondere Plattenaufteilsägen. Er besteht aus einer Vielzahl von aufrecht nebeneinander angeordneten und sich seitlich berührenden, länglichen Dichtlamellen (36), die in gemeinsamer, vertikaler Ebene unter ihrem Schwergewicht in eine Abdichtstellung absenkbar geführt sind. In ihrer Abdichtstellung ruhen sie auf Auflageleisten (16) des Maschinentisches (10) auf, die zwischen sich quer zur Trennebene a-a verlaufende Spannzangenführungsnuten (20) definieren. Zur Abdichtung der letzteren sind die Dichtlamellen (36) mit jeweils einem Nutabdichtelement (60 bzw. 60') kombiniert.

## Beschreibung

Die Erfindung betrifft einen Staubschutzvorhang für Sägemaschinen, insbesondere Plattenaufteilsägen, der im Oberbegriff des Anspruches 1 erläuterten Art.

Bei dem auf Platten-Aufteilsägen zur Verarbeitung kommenden Schnittgut handelt es sich in der Regel um große und entsprechend schwere, kaschierte Spanplatten, die einzeln oder als Plattenpaket zum Aufteilen gemäß einem Schnittprogramm relativ zur Maschinentrennebene entsprechend einzustellen sind. Dies wird mittels einer Vorschubvorrichtung bewerkstelligt, die dazu eine Platte oder ein Plattenpaket an der von der Trennebene abgekehrten Seite mittels Spannzangen erfasst und transportiert.

Zu Beginn von Plattenaufteiloperationen ist an das Plattenmaterial an seiner der Trennebene zugekehrten Stirnseite eine parallel zur Trennebene verlaufende Referenzkante anzuformen, wozu bisher im Regelfall ein schmaler Materialstreifen (Besäumschnitt) abgetrennt worden ist.

Seit neuestem verzichtet man hierauf aus Kostengründen immer häufiger und führt statt dessen lediglich noch einen sogenannten Kratzschnitt aus, bei dem das Plattenmaterial mit Bezug auf die Trennebene derart eingestellt wird, dass bei dem anschließend durchzuführenden Kratzschnitt Plattenmaterial lediglich noch in einer Dicke abgetragen wird, die nicht größer ist als die Schnittbreite des Sägeblattes.

Bei solchen Besäum- bzw. Kratschnitten, bei denen der Druckbalken wo der Plattenaufteilsäge nur auf einer Seite des Sägeblattes auf dem Schnittgut aufruht, können anfallender Staub und Späne nur unzureichend abgesaugt werden.

Um dabei die Verschmutzung der Maschine und der Umgebung so klein wie möglich zu halten, ist es bekannt, am Druckbalken von Plattenaufteilsägen zumindest an der Balkenlängsseite, die sich auf der vom Schnittgut abgekehrten Seite befindet, einen sich über die gesamte Länge des Tischsägeschlitzes erstreckenden Staubschutzvorhang vorzusehen.

Dieser Staubschutzvorhang ist durch eine Vielzahl von aufrecht nebeneinander angeordneten und sich seitlich berührenden, länglichen Dichtlamellen gebildet, die in einer Vertikalebene nach erfolgter Freigabe parallel zur Hubrichtung des Sägendruckbalkens unabhängig voneinander relativ zu diesem unter ihrem Schwergewicht nach unten in eine Abdichtstellung absenkbar geführt und gemeinsam aus der Abdichtstellung in eine obere Abhebestellung zurücksteuerbar sind.

In ihrer Abdichtstellung ruhen die Dichtlamellen mit ihrer unteren Stirnkante auf benachbarten Auflageleisten des Maschinentisches auf, die entweder durch in die Tischoberseite quer zur Trennebene eingefräste Längsnuten oder durch auf den Maschinentisch aufgeschraubte Einzelleisten gebildet sein können.

Diese Auflageleisten definieren zwischen sich Führungsnuten für die Spannzangen der Vorschubvorrichtung, deren unterer Zangenschenkel für Vorschubbewegungen des Schnittgutes notwendigerweise unterhalb der Tischauflageebene in eine solche Führungsnut eingreift.

Das Vorhandensein dieser in großer Zahl vorgesehenen Führungsnuten schafft trotz des durch die Dichtlamellen gebildeten Staubschutzvorhanges große Probleme für die gewünschte seitliche Abdichtung unterhalb des Druckbalkens, da das bei Besäum- oder Kratzschnitten anfallende Abfallmaterial in Form von Staub und Spänen unterhalb der Dichtlamellen in erheblicher Menge noch in die Führungsnuten gelangen und sich dadurch vor dem Staubschutzvorhang ausbreiten und die Maschine sowie die Umgebung einschmutzen kann.

Zwar konnte dieser Nachteil in größerem Umfange dadurch vermindert werden, dass in alle Führungsnuten, die für ein durchzuführendes Schnittprogramm für den Eingriff von Spannzangen nicht benötigt wurden, unterhalb des Staubschutzvorhanges jeweils ein in diese formschlüssig eingepasstes Abdichtklötzchen eingesetzt worden ist und damit bis auf den Nutgrund der Raum zwischen Trennebene und Staubschutzvorhang dicht gemacht werden konnte; die zur Führung von unteren Spannzanenschenkeln benötigten Führungsnuten sind jedoch nach wie vor von einem solchen Abdichtklötzchen freizuhalten, mit der Folge, dass aus diesen Staub und Späne weiter austreten und sich auf der Maschine verteilen können.

Es ist deshalb Aufgabe der Erfindung, einen Staubschutzvorhang der im Oberbegriff des Anspruches 1 erläuterten Art anzugeben, der eine wirkungsvolle Abdichtung sicherstellt, ohne dass für den Eingriff der unteren Zangenschenkel von Spannzangen nicht benötigte Führungsnuten des Maschinentisches speziell zu verschließen sind.

Diese Aufgabe wird erfindungsgemäß durch die kennzeichnenden Merkmale des Anspruches 1 gelöst.

Senken sich die Dichtlamellen des Staubschutzvorhanges in ihre untere Abdichtstellung auf die Auflageleisten des Maschinentisches ab, kann jeweils deren Nutabdichtelement mit der sich unterhalb der jeweiligen Dichtlamelle befindenden Führungsnut in Eingriff kommen und somit eine wirksame Abdichtung sicherstellen.

Die Erfindung ermöglicht unterschiedliche Ausführungsformen von Dichtlamellen. Eine Ausbildung gemäß Anspruch 2 bietet den Vorteil, dass auf die bisher notwendige Abdichtung von Führungsnuten mit einem Abdichtklötzchen, die für eine Führung eines unteren Spannzangenschenkels nicht benötigt werden, verzichtet werden kann.

Eine zu bevorzugende Ausführungsform der Erfindung ist

Gegenstand des Anspruches 3. Bei dieser Konstruktion ist durch die vertikale, relative Verschiebbarkeit von Dichtlamellen und Nutabdichtelementen sichergestellt, dass die Dichtlamellen mit ihrer unteren Stirnkante auch dann auf benachbarten Auflageleisten abdichtend aufruhen, falls deren Nutabdichtelement bspw. aufgrund einer ggf. vorliegenden Verschmutzung nicht mehr auf dem Nutgrund der entsprechenden Führungsnut aufruhen sollten.

Ein weiterer wesentlicher Vorteil dieser Konstruktion besteht darin, dass mit einem solchen Staubschutzvorhang Sägemaschinen, insbesonderer Plattenaufteilsägen, nachrüstbar sind, bei denen aus den oben erläuterten Grunden beim anfänglichen Einrichten der Maschine die für eine Spannzangenführung nicht benötigten Führungsnuten des Maschinentisches unterhalb des Staubschutzvorhanges durch Abdichtklötzchen verschlossen worden sind.

Vorteilhafte Ausgestaltungen dieses Staubschutzvorhangs sind Gegenstand der Ansprüche 4 bis 10.

In der Zeichnung ist ein Ausführungsbeispiel eines erfindungsgemäßen Staubschutzvorhangs in der in den Ansprüchen 3 bis 10 definierten Ausbildung dargestellt.

Es zeigen in schematischer Darstellung:
- Figur 1: eine Stirnansicht eines mit einem vorderen und einem hinteren Staubschutzvorhang ausgestattenen Druckbalkens einer Plattenaufteilsäge, wobei ein auf den Maschinentisch aufgebrachtes Plattenpaket zur Durchführung eines Kratzschnittes mittels des Druckbalkens festgelegt ist;
- Figur 2: eine Darstellung ähnlich Figur 1, wobei die Dichtlamellen beider Staubschutzvorhänge sich in ihrer Abdichtstellung befinden;
- Figur 3: eine Vorderansicht auf den hinteren Staubschutzvorhang gemäß Figur 2, in kleinerem Maßstab als Figur 2;
- Figur 3a: eine Vorderansicht des unteren Endstückes einer mit einem Nutabdeckelement kombinierten Dichtlamelle;

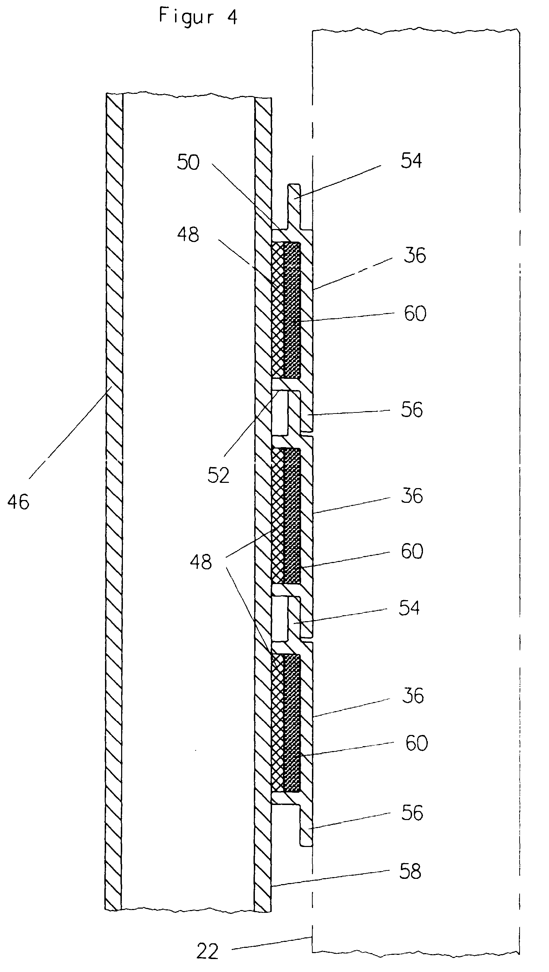

- Figur 4: einen horizontalen Teilschnitt durch den hinteren Staubschutzvorhang entlang der Linie IV-IV der Figur 2 gesehen, in größerem Maßstab als Figur 2.

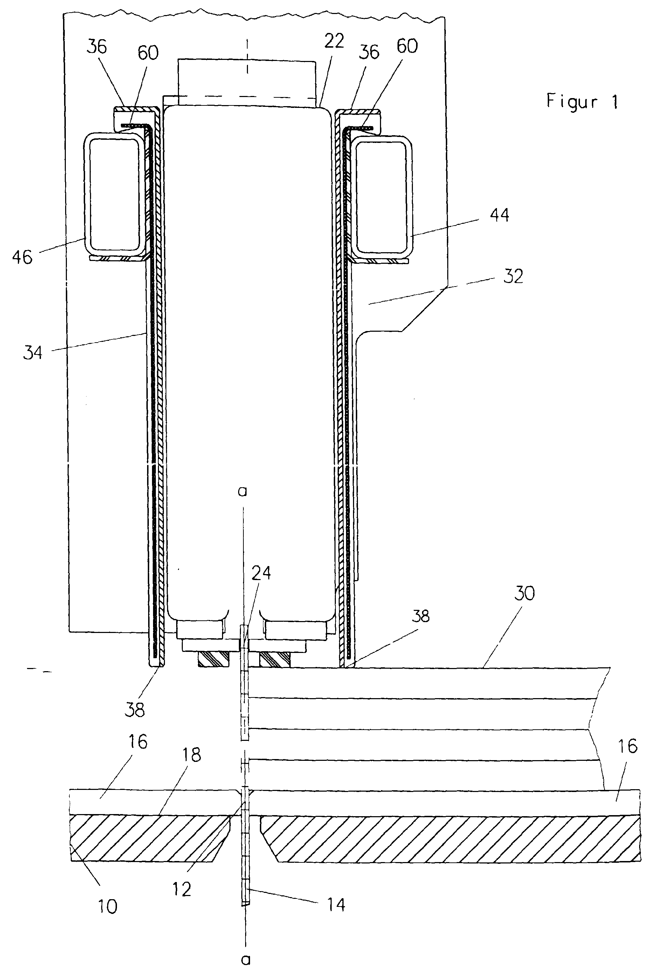

In Figur 1 bezeichnet 10 einen Maschinentisch einer Plattenaufteilsäge und 12 einen diesen vertikal durchsetzenden Sägeschlitz für den Durchtritt eines strichpunktiert angedeuteten Kreissägeblattes 14 eines unter Tisch fahrenden Sägeaggregates, das nicht gezeigt ist.

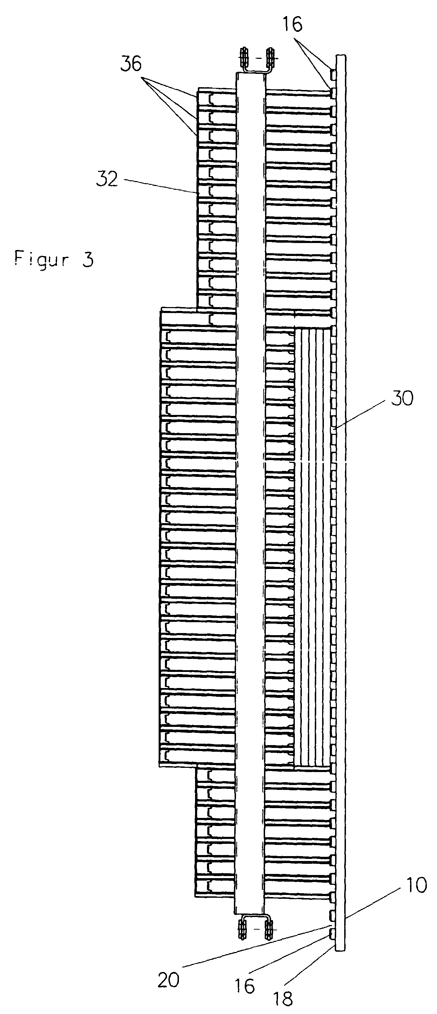

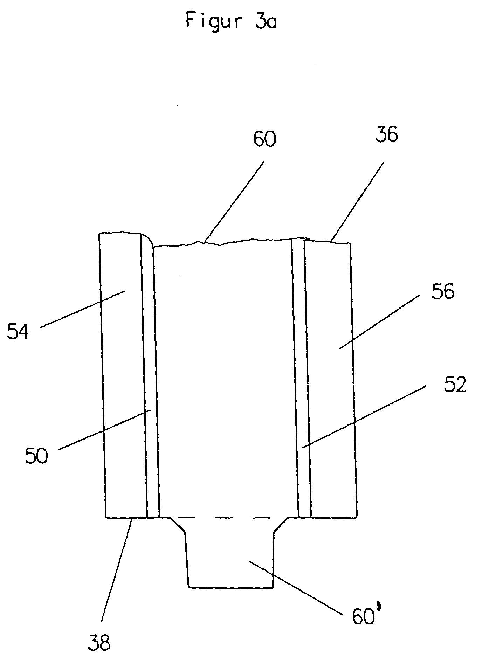

Mit 16 sind vorzugsweise auf die Tischoberseite 18 aufgeschraubte Auflageleisten bezeichnet, die sich quer zum Sägeschlitz 12 und in seitlichem Abstand zueinander parallel erstrecken und zwischen sich jeweils eine Führungsnut 20 definieren (siehe Figur 3).

Oberhalb des Sägeschlitzes 12 ist, wie bei solchen Sägemaschinen üblich, ein sich in dessen Längsrichtung erstreckender, horizontaler Druckbalken 22 vorgesehen, mit dessen Hilfe auf den Maschinentisch 10 zum Aufteilen aufgelegtes Plattenmaterial zur Durchführung von Sägeoperationen auf dessen Auflageleisten 16 festlegbar ist.

Hierzu ist der Druckbalken 22 vertikal entsprechend verstellbar. An seiner Balkenunterseite weist der Druckbalken 22 einen sich in der Trennebene a-a des Kreissägeblattes 14 befindenden Eintauchschlitz 24 auf, in welchen das Kreissägeblatt 14 bei Sägeoperationen einzutauchen vermag. Dieser Eintauchschlitz 24 mündet in eine balkeninnere Absaugkammer ein, die an einer Absauganlage zum Absaugen von anfallenden Bearbeitungsrückständen, wie Staub und Späne, anschließbar ist, und durch die gleichfalls unterhalb der Tischoberfläche Bearbeitungsrückstände absaugbar sind.

Mit 26 und 28 sind zwei jeweils auf einer Seite des Eintauchschlitzes 24 an der Balkenunterseite vorgesehene und sich in Balkenlängsrichtung erstreckende, elastische Abstützleisten bezeichnet, mit denen sich der Druckbalken 22 auf festzulegendem Plattenmaterial, bspw. auf einem mit Bezug auf die Trennebene a-a zur Durchführung eines Kratzschnittes eingestellten Plattenstapel 30 abstützt.

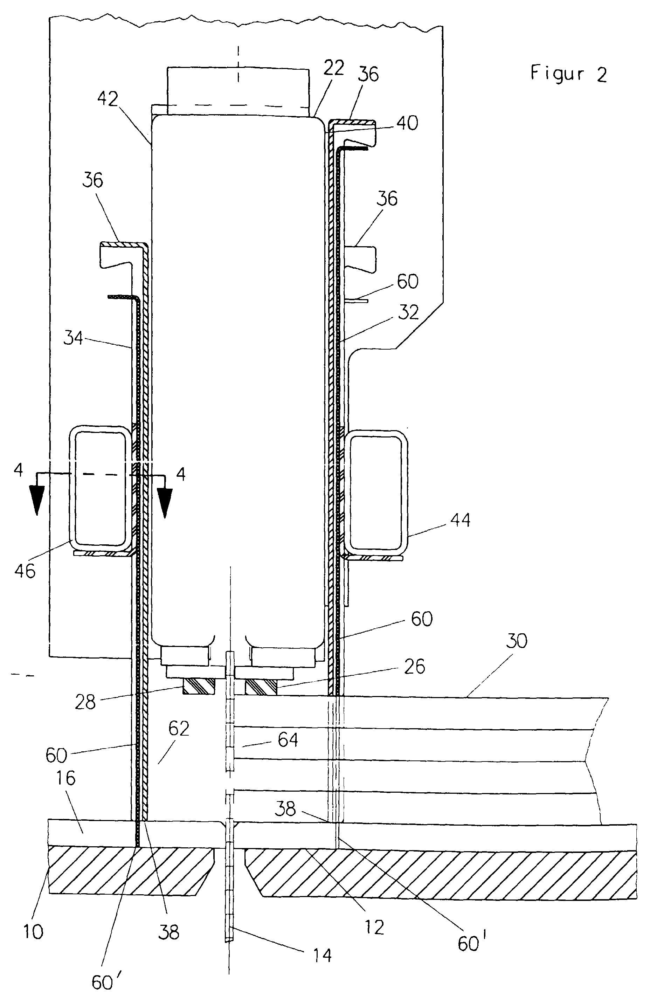

Dem Druckbalken 22 ist auf beiden Längsseiten jeweils ein Staubschutzvorhang 32 bzw. 34 zugeordnet, von denen der auf der Maschinenbedienseite vorgesehene Staubschutzvorhang 32 die seitlich des Plattenstapels 30 unabgedeckt verbliebenen Führungsnuten 20 verschließt sowie die diese bildenden Auflageleisten 16 abdeckt (Figur 3), während der auf der Werkstückübernahmeseite der Maschine vorgesehene Staubschutzvorhang 34, wie Figur 2 zeigt, sämtliche freigebliebenen Auflageleisten 16 und Führungsnuten 20 abdeckt bzw. verschließt.

Im Folgenden wird nun die Konstruktion der im Aufbau einander entsprechenden Staubschutzvorhänge 32, 34 beschrieben.

Diese weisen in einer vertikalen Ebene eine Vielzahl von dicht nebeneinander aufrecht angeordneten, leistenartigen Dichtlamellen 36 auf, deren Anordnung und Breite so getroffen ist, dass deren untere horizontale Stirnkante 38, eine Abdichtkante bildend, in der Abdichtstellung der Dichtlamellen 36 jeweils symmetrisch auf zwei benachbarten Auflageleisten 16 aufruht und dabei die zwischen diesen vorhandenen Führungsnut 20 überbrückt. Die vorzugsweise durch Formkörper aus Kunststoff gebildeten Dichtlamellen 36 sind zwischen einer vertikalen Druckbalkenlängswand 40 bzw. 42 und jeweils einem dieser vorgelagerten, horizontalen, balkenartigen Lamellenmitnehmer 44 bzw. 46 vertikal frei beweglich angeordnet, der seinerseits über eine nicht dargestellte Betätigungsvorrichtung aus einer oberen Lamellenrückhaltestellung (siehe Figur 1) in eine untere Lamellenfreigabestellung (siehe Figur 2) verstellbar ist.

Die Dichtlamellen 36 sind am Lamellenmitnehmer 44 bzw. 46 in Hochrichtung geführt, wozu sie vorzugsweise einen flachen, U-förmigen Querschnitt aufweisen. Mit 48 ist am Lamellenmitnehmer 44 bzw. 46 je Dichtlamelle 36 ein flaches Führungsglied vorgesehen, das zwischen die U-Schenkel 50 und 52 der Dichtlamellen 36 eingreift und diese seitlich abstützt bzw. vertikal führt.

An die Außenseite der U-Schenkel 50, 52 ist jeweils ein von diesen abragender Längssteg 54 bzw. 56 angeformt, die, bezogen auf die benachbarte flache Längsseite 58 des Lamellenmitnehmers 46 bzw. 48 so zueinander versetzt sind, dass sich benachbarte Dichtlamellen 36 mit ihren Längsstegen 54 und 56 abdichtend schuppenartig übergreifen.

Die Dichtlamellen 36 sind jeweils mit einem flach leistenartigen Nutabdichtelement 60 kombiniert, das in diesen zwischen deren U-Schenkeln 50, 52 und dem Führungsglied 48 in vertikaler Richtung frei beweglich angeordnet ist.

An das untere Ende der Nutabdichtelemente 60 ist jeweils ein Ansatzstück 60' angeformt (siehe Figur 3a), dessen Umrissform dem Querschnitt der Führungsnuten 20 entspricht und mit dem sie bei abgesenktem Lamellenmitnehmer 44 bzw. 46 in die ihnen zugeordnete Führungsnut 20 formachlüssig eintauchen.

Damit ist der Zwischenraum 62 zwischen Kreissägeblatt 14 und Staubschutzvorhang 34 nach außen zuverlässig abgedichtet. Dies gilt ebenso für die neben dem Plattenpaket 30 vorhandenen Zwischenräume 64 zwischen Kreissägeblatt 14 und Staubschutzvorhang 32.

Nach Beendigung eines Besäum- oder Kratzschnittes werden die Lamellenmitnehmer 44, 46 wieder in ihre in Figur 1 gezeigte, obere Ausgangsstellung zurückgesteuert, wobei sie im Verlaufe dieser Hubbewegung die mit einem Nutabdichtelement 60 kombinierten Dichtlamellen 36 wieder in deren Ausgangsstellung zurücksteuern.

Eine in konstruktiver Hinsicht wesentlich vereinfachte Ausführungsform der Dichtlamellen 36 sieht vor, an deren unteren Abdichtkante 38 ein Nutabdichtelement unmittelbar anzuformen, wie es in Figur 3a mit 60' bezeichnet ist.

## Patentansprüche

1. Staubschutzvorhang für Sägemaschinen, insbesondere Plattenaufteilsägen, der zumindest an einer Längsseite eines Sägendruckbalkens (22) vorgesehen ist und sich in seitlichem Abstand sowie im Wesentlichen über die gesamte Länge eines Tischsägeschlitzes (12) parallel erstreckt, in dessen Bereich Staub und Späne absaugbar sind, mit einer Vielzahl von aufrecht nebeneinander angeordneten und sich seitlich berührenden, länglichen Dichtlamellen (36), die in einer vertikalen Ebene parallel zur Hubrichtung des Sägendruckbalkens (22) relativ zu diesem unter ihrem Schwergewicht und nach erfolgter Freigabe unabhängig voneinander absenkbar geführt und gemeinsam aus einer unteren Abdichtstellung in eine obere Abhebestellung zurücksteuerbar sind, wobei die Dichtlamellen (36) in ihrer Abdichtstellung auf Auflageleisten (16) des Maschinentisches (10) aufruhen, die beiderseits des Tischsägeschlitzes (12), sich zu diesem quer erstreckend, in regelmäßigem, seitlichem Abstand voneinander vorgesehen sind und Spannzangenführungsnuten (20) definieren, **dadurch gekennzeichnet,** dass die Dichtlamellen (36) jeweils mit einem Nutabdichtelement (60) bzw. (60') zum Abdichten der sich in der unteren Abdichtstellung der Dichtlamellen (36) unterhalb derselben befindenden Spannzangenführungsnut (20) kombiniert sind.

2. Staubschutzvorhang nach Anspruch 1, dadurch gekennzeichnet, dass das Nutabdichtelement durch einen an die untere Abdichtkante der Dichtlamellen (36) angeformten Ansatz (60') gebildet ist, der im Wesentlichen formschlüssig mit einer Spannzangenführungsnut (20) in Eingriff bringbar ist.

3. Staubschutzvorhang nach Anspruch 1, dadurch gekennzeichnet, dass die Nutabdichtelemente (60) relativ zu den diesen zugeordneten Dichtlamellen (36) in vertikaler Richtung verschiebbar geführt sind, dass Dichtlamellen (36) und Nutabdichtelemente (60) nach Freigabe der Dichtlamellen (36) sich unter ihrem Schwergewicht gemeinsam in ihrer Abdichtstellung nach unten bewegen und dass Dichtlamellen (36) und Nutabdichtelemente (60) gemeinsam in eine obere Abhebestellung zurücksteuerbar sind.

4. Staubschutzvorhang nach Anspruch 3, dadurch gekennzeichnet, dass eine Freigabe- und Rückstellvorrichtung einen sich horizontal sowie parallel zum Druckbalken (22) erstreckenden und relativ zu diesem absenk- und anhebbaren, balkenartigen Lamellenmitnehmer (44 bzw. 46) aufweist, auf dem sich Dichtlamellen (36) und Nutabdichtelemente (60) abstützen.

5. Staubschutzvorhang nach einem der Ansprüche 3 oder 4, dadurch gekennzeichnet, dass Dichtlamellen (36) und Nutabdichtelemente (60) jeweils flach, leistenförmig ausgebildet und letztere jeweils in einer Führungsnut der Dichtlamellen (36) in deren Längsrichtung verschiebbar geführt sind.

6. Staubschutzvorhang nach Anspruch 4 oder 5, dadurch gekennzeichnet, dass die Längsachse der aufrechten Dichtlamellen (36) und Nutabdichtelemente (60) jeweils in der Quermittenebene einer der Spannzangenführungsnuten (20) liegen.

7. Staubschutzvorhang nach einem der vorhergehenden Ansprüche 3 bis 6, dadurch gekennzeichnet, dass die Dichtlamellen (36) zwischen Sägendruckbalken (22) und balkenartigem Lamellenmitnehmer (44 bzw. 46) angeordnet sind, wobei die ein leistenartiges Nutabdichtelement (60) aufnehmende Führungsnut der Dichtlamellen (36) dem Lamellenmitnehmer (44 bzw. 46) zugekehrt ist und mit dieser Führungsnut ein am Lamellenmitnehmer (44 bzw. 46) angeordnetes Führungsglied (48) in Eingriff ist.

8. Staubschutzvorhang nach einem der vorhergehenden Ansprüche 4 bis 7, dadurch gekennzeichnet, dass Dichtlamellen (36) und Nutabdichtelemente (60) mit ihrem oberen Ende den Lamellenmitnehmer (44 bzw. 46) übergreifen.

9. Staubschutzvorhang nach einem der vorhergehenden Ansprüche, dadurch gekennzeichnet, dass die Dichtlamellen (36) durch Formteile aus Kunststoff und die Nutabdichtelemente (60) aus Metall bestehen.

10. Staubschutzvorhang nach einem der vorhergehenden Ansprüche, dadurch gekennzeichnet, dass einander benachbarte Randteile (54, 56) von Dichtlamellen (36) einander schuppenartig übergreifen.
